# EUROPEAN PATENT SPECIFICATION

(11) **EP 4 550 715 B1**
(45) Date of publication and mention of the grant of the patent: **18.03.2026**
(21) Application number: 23207757.8
(22) Date of filing: 03.11.2023
(51) Int. Cl.: H04L 9/08

(54) **QKD SYSTEM AND METHOD WITH INCREASED BANDWIDTH**
QKD-SYSTEM UND VERFAHREN MIT ERHÖHTER BANDBREITE
SYSTEME QKD ET PROCEDE A LARGEUR DE BANDE ACCRUE

(43) Date of publication of application: 07.05.2025
(73) Proprietor: ID Quantique S.A., 1227 Genève (CH)
(72) Inventor: CAMUS, Thomas, 74930 Arbusigny (FR); LAYAT, Kevin, 74930 Pers-Jussy (FR)
(74) Representative: KATZAROV S.A.

(56) References cited:
- WO-A1-2022/211731
- US-A1- 2023 275 752

## Description

### Technical Field

The present invention relates to a method and a system for increasing the bandwidth of a QKD system and more particularly to a method and a system for increasing the bandwidth of a QKD system without impacting the quality of the encryption keys.

### Background of the art

Quantum key distribution, in the following also referred to as QKD is part of the general Quantum cryptography technology and is a method allowing the distribution of a secret key between two distant parties, the emitter usually called Alice and the receiver usually called Bob, with a provable absolute security. Quantum key distribution relies on quantum physics principles and encoding information in quantum states, or qubits, as opposed to classical communication's use of bits. Usually, photons are used for these quantum states. Quantum key distribution exploits certain properties of these quantum states to ensure its security.

More particularly, the security of this method comes from the fact that the measurement of a quantum state of an unknown quantum system modifies the system itself. In other words, a spy eavesdropping on a quantum communication channel cannot get information on the key without introducing errors in the key exchanged between the emitter and the receiver thereby informing the user of an eavesdropping attempt.

The encryption devices enable secure transmission of useful payload by performing some encryption using the keys exchanged by quantum key distribution. Specific quantum key distribution systems are described for instance in US 5,307,410, and in the article by C. H. Bennett entitled "Quantum cryptography using any two non-orthogonal states", Phys. Rev. Lett. 68, 3121 (1992).

However, a major problem in the use of QKD is the limited key rate provided by such system. Especially, when QKD is implemented in large size networks running on long distances, it might happen that the user is left without bits to be used. In fact, it should be recalled that data a user can transfer can be as big as the data the user has exchanged with the QKD.

Despite the above-mentioned limitation, it is still extremely interesting for a user to implement the QKD in its telecommunications network because of the high security it allows notwithstanding the limitation in bandwidth.

There is therefore a need for a solution to the above-mentioned problem. The solution would be to propose a QKD system that can operate in a new mode offering practically unlimited bandwidth while matching the security of a QKD-based key exchange.

It is also important to stress that the solution should provide that the data received by the users is of quality as high as in the traditional mode of operation of QKD, not changed or manipulated in any ways, as there is no derivation nor expansion of consumer keys.

OTP mode of operation is normally used in QKD devices. When one wants to increase the bandwidth of this mode, several solutions have been investigated:
- Using a key derivation function or a key expansion mechanism to artificially augment the size of QKD-exchanged keys. However, this solution offers randomness of a much lower quality than the one of a pure QKD-based systems. In particular, the maximal entropy of QKD-exchanged key is diluted across a larger bitstream.
- Relying on classical key exchange mechanism instead of QKD, such as RSA-based or Elliptic-Curve Cryptography-based schemes. However, such technologies are not quantum-safe.
- Relying on a post-quantum cryptographic scheme instead of QKD. This solution is quantum-safe and offers satisfactory key rate. However, the assumptions on which it relies are much less robust and way less understood than the ones that guarantee QKD and symmetric encryption security.
- Relying on Service Continuity (SC) mode, in which the security of the transmission is lowered in favor of higher performances. However, such technologies limit the security.

In view of the above, there is a need to increase the bandwidth offered by the QKD while the keys provided to the user maintain the same level of security offered by the QKD.

With current techniques, the increase of the bandwidth is achieved at the expenses of security. In fact, either classical cryptography is used or post-quantum algorithm whose security proofs are missing.

The object of the present invention is therefore to provide a system and a method which permit to increase the QKD bandwidth without impacting the quality of the encryption keys.

### Summary of the invention

The above problems are solved by the present invention which is based on a new functioning mode of the QKD in favor of higher performances.

A first aspect of the invention is Quantum Key Distribution system comprising an emitter and a receiver adapted to exchange QKD-based key comprising starting (S100) the process and triggering (S101) QKD-based key exchange between the emitter and the receiver, exchanging (S102) a first key K1 and a second key K2 between the emitter and the receiver, generating (S103) a third key K3 by expanding said first key K1 at both the emitter and the receiver; generating (S103) a fourth key K4 at the emitter via its QRNG, and encrypting (S104) K4 with K2 as a message C using a symmetric encryption scheme, and send it to the receiver, decrypting (S105) message C with K2 to obtain K4 at the receiver, generating (S106, S106') a fifth key K at the emitter and the receiver by computing K = K3 XOR K4 and delivering (S107, S107') K to the respective consumers.

According to a preferred embodiment of the present invention, K1 is expanded by a key stretching mechanism where K1 is expanded to N bits by the emitter and the receiver simultaneously.

Preferably, the key stretching mechanism can be anyone among a Key Derivation Function (KDF) or a Deterministic Random Bit Generator (DRBG).

Advantageously, K1 and K2 are 256 bits key.

In a preferred manner, K3 and K4 are N-bits.

Preferably, the symmetric encryption scheme consists in a BlockCipher Encryption procedure such that C = BlockCipherEnc(key=K2, data=K4).

Advantageously, the symmetric Decryption scheme consists in a BlockCipher Decryption procedure such that K4 = BlockCipherDec(key=K2, data=C).

A second aspect of the invention is a Quantum Key Distribution method to be implemented by the Quantum Key Distribution system of the first aspect comprising starting the process and triggering QKD-based key exchange between the emitter and the receiver, exchanging a first key K1 and a second key K2 between the emitter and the receiver, generating a third key K3 by expanding said first key K1 at both the emitter and the receiver, generating a fourth key K4 at the emitter via its QRNG, encrypting K4 with K2 as a message C using a symmetric encryption scheme, and send it to the receiver, decrypting message C with K2 to obtain K4 at the receiver, generating a fifth key K at the emitter and the receiver by computing K = K3 XOR K4, and delivering K to the respective consumers. The particular advantages of this device of the invention being similar to the ones of the method of the first aspect of the invention, they will not be repeated here.

A third aspect of the invention relates to a Quantum Key Distribution method comprising starting the process and triggering QKD-based key exchange between the emitter and the receiver, exchanging a first key K1 and a second key K2 between the emitter and the receiver, generating a third key K3 by expanding said first key K1 at both the emitter and the receiver, generating a fourth key K4 at the emitter via its QRNG, encrypting K4 with K2 as a message C using a symmetric encryption scheme, and send it to the receiver, decrypting message C with K2 to obtain K4 at the receiver, generating a fifth key K at the emitter and the receiver by computing K = K3 XOR K4, and delivering K to the respective consumers and to a Quantum Key Distribution system adapted to carry out said method.

A first advantage of the present invention is that it delivers keys of full entropy, hence of quality as high as the ones of the ITS mode. More particularly, the consumer key delivered is built as K = K3 ⊕ K4, where K4 has been generated using a QRNG, hence has full entropy. The entropy of the bitwise-XOR of two streams is at least as high as the ones of the said streams. The entropy of K is therefore maximal.

Another advantage is that it is as secure as the underlying QKD protocol. It is therefore quantum-safe, and more secure than a PQC-based solution or the SC mode of operation. The consumer key delivered is built as K = K3 ⊕ K4, where K3 and K4 are totally independent keys. Therefore, an attacker aiming at obtaining K must obtain simultaneously K3 and K4. The key K3 is stretched from a key K1 exchanged via QKD. The only information associated to K3 that the adversary can eavesdrop are the one linked to the quantum distribution of K1. It means that the only way for the adversary to recover K3 would be by recovering K1, which proves the claim.

Finally, unlike the ITS mode, the key rate of the present invention is not limited by the one of the leveraged QKD devices. In the present invention, QKD-exchanged keys are used for:
- symmetrically encrypting a QRNG stream. Most reasonable symmetric encryption schemes (such as AES or ARIA) and reasonable mode of encryptions (such as CTR or GCM) allow for encryption of a very long stream with a single key without compromising the security, up to a very large threshold (e.g., about 64GB for the commonly deployed AES-256-GCM), and
- Feeding a stretching mechanism, namely a KDF or DRBG. In our setup, even a mechanism as simple and naive as repeating the seed could be leveraged, without any practical limits on the seed reusing.

It means that in the present invention, a pair of QKD-exchanged key can be used to several gigabytes of consumer keys, which are generated using a QRNG device. Because of the overall performance of symmetric encryption schemes and stretching mechanism, the SC mode would therefore be limited only by the QRNG key rate, which is as of now much higher than the QKD key rate.

### Brief description of the drawings

Further particular advantages and features of the invention will become more apparent from the following non-limitative description of at least one embodiment of the invention which will refer to the accompanying drawings, wherein:
- Figure 1 is a block diagram showing a conventional ITS mode of operation of a QKD system;
- Figure 2 is a block diagram showing a conventional SC mode of operation of a QKD system; and
- Figure 3 is a block diagram showing the mode of operation of the present invention.

### Detailed description of the invention

The present detailed description is intended to illustrate the invention in a non-limitative manner since any feature of an embodiment may be combined with any other feature of a different embodiment in an advantageous manner.

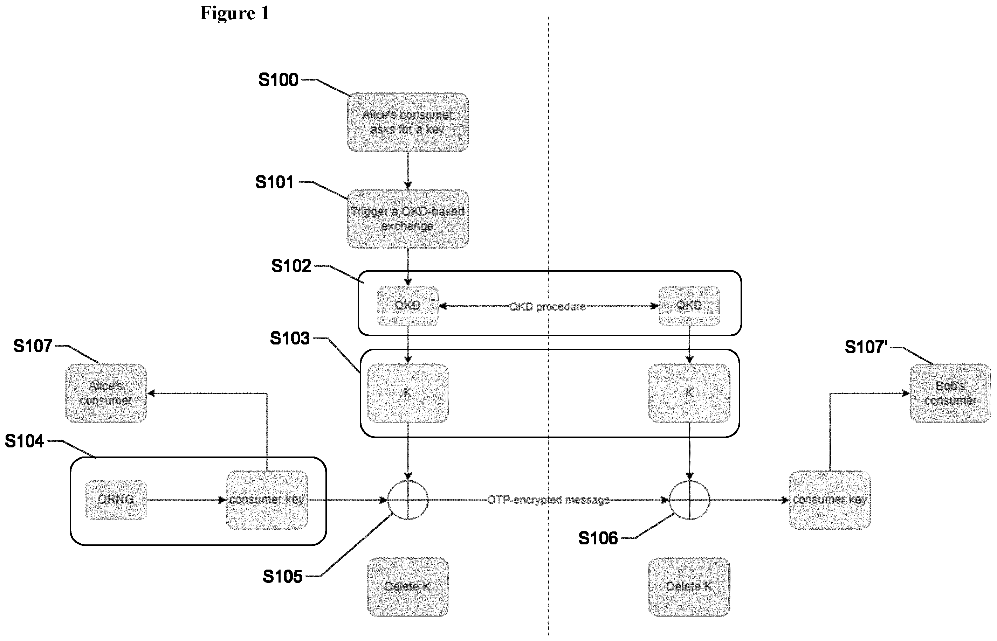

Figure 1 shows a conventional Information-Theoretic Secure (ITS) running mode of a QKD system. This is a usual mode, where the highest security is guaranteed but with the lowest consumer key rate. The ITS mode heavily relies on the One-Time Pad (OTP) encryption. OTP is an encryption scheme that uses a XOR between the data and a random key. The hypothesis on the key is that it needs to have the same size as the data, it needs to be used only once and it needs to come from an independent and identically distributed source of entropy therefore it has to be uniform.

In the one-Time Pad (OTP) encryption, consumer keys are transmitted using OTP encryption, with encryption keys being QKD-exchanged, which is both perfectly secure but lacks efficiency in terms of bandwidth because as explained below, the QKD-exchanged key K must be as large as the consumer key K0. In other words, to guarantee information-theoretic security, OTP-encryption keys K must be as long as the data they encrypt and never reused. Therefore, for N bits of consumer key transmitted between two QKD nodes, N bits of QKD-exchanged keys are consumed to encrypt the former. In other words, the bitrate of the ITS mode is equal to the one of the leveraged QKD device.

Figure 1 illustrates this, where at step S100 Alice's consumer starts the process and asks for a key such that Alice triggers a QKD-based key exchange with Bob in step S101. We easily see that the left side of the figure represents Alice and the right side represents Bob.

Following this, in steps S102, Alice and Bob exchange a plurality of keys K1,...,KN of preferably 256-bits each via QKD and concatenate it in a N*256 bits key K on each side, see step S103.

Then, Alice generates a N*256 bits key K0 via its QRNG in step S104, and computes, in step S105, message C = K0 XOR K and sends it to Bob. Once Bob receives C, it computes C XOR K0 in step 106, with K that he has thanks to the S102-S103 QKD step to recover K0.

Finally, in step S107 and S107', Alice and Bob both have K0 and deliver K0 to their respective consumer who can as from now use this key for any cryptographic purpose including encryption and K is deleted.

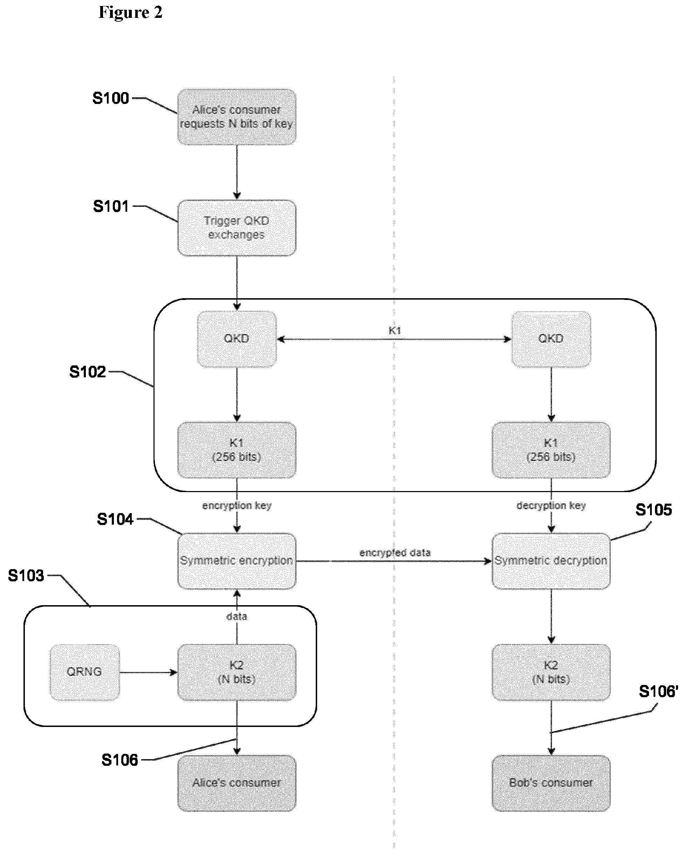

Figure 2 shows a conventional Service Continuity (SC) mode, wherein the security of the key transmission is lowered in favor of higher performances. This mode combines the QKD protocol with a symmetric encryption scheme, preferably a BlockCipher Encryption/decryption procedure, to ensure continuity of the key delivery service, so that there are always keys ready to be used by the consumer. Compared to the ITS mode, the SC mode offers weaker guarantees on the security of the transmission of keys, but it has several advantages compared to e.g., a key exchange mechanism solely based on Post-Quantum Cryptography (PQC).

In Figure 2, as in the ITS mode, at step S100 Alice's consumer starts the process and asks for a key such that Alice triggers a QKD-based key exchange with Bob in step S101. We easily see that the left side of the figure represents Alice and the right side represents Bob.

Then, at step S102 Alice and Bob exchange one single key K1 with fixed size, preferably 256 bits, via QKD and this is different from the ITS where Alice and Bob exchange N 256-bits keys K1,...,KN via QKD where the concatenated Key K may have a variable size according to the size of the data to be exchanged.

Then, in step S103 Alice generates a N*256 bits key K2 via its QRNG, and computes, in step S104, message C such that C = BlockCipherEnc(key=K1, data=K2) and sends it to Bob.

In Step S105, once Bob has received C and can compute BlockCipherDec(key=K1, data=C) with K1, that he has thanks to the S102 QKD step, to recover K2

Finally in step S106 and S106', like in the ITS mode, Alice and Bob deliver K2 to their respective consumer who can as from now use this key any cryptographic purpose including encryption.

As of now, as explained above in reference to figure 1, in the standard QKD mode of operation, consumer keys are transmitted using OTP encryption, with encryption keys being QKD-exchanged. To guarantee information-theoretic security, OTP encryption keys must be as long as the data they encrypt and must not be reused. Therefore, for N bits of consumer key transmitted between two QKD nodes, one needs to consume N bits of QKD-exchanged keys to encrypt the former. In other words, the bit rate of the current QKD network is equal to the one of the leveraged QKD devices.

The solution to this problem, i.e., the present invention, basically consists in replacing the OTP-encryption of the ITS mode by the combination of:
- a symmetrically encrypted transmission of a fully entropic stream similar to AES and,
- a lower entropic stream obtained from the stretching of a QKD-exchanged key.

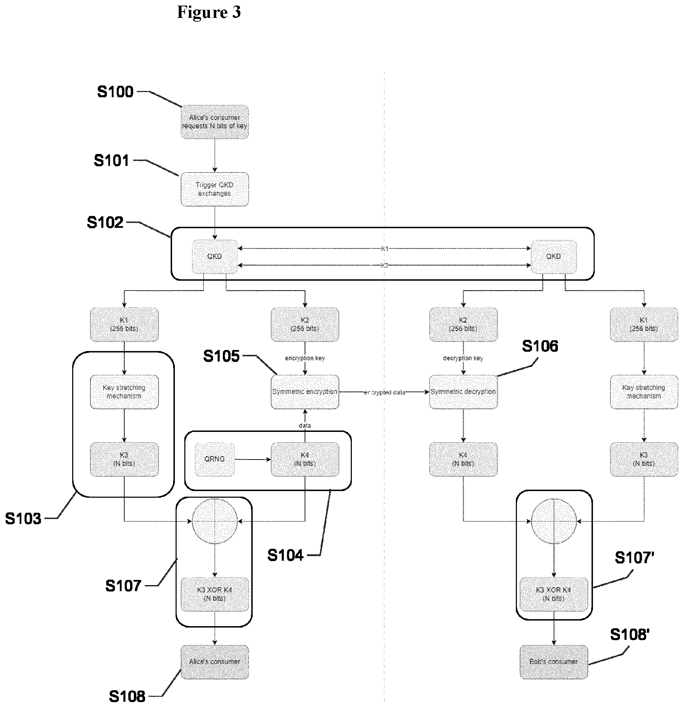

This is shown in figure 3 where at step S100 Alice's consumer starts the process and asks for a key such that Alice triggers a QKD-based key exchange with Bob in step S101. In this QKD step S102, Alice and Bob exchange two keys K1 and K2 via QKD. In the specific example the keys are 256 bits (depending on the key stretching and the symmetric encryption procedure).

Then, once K1 is obtained, both Alice and Bob send K1 to a key stretching mechanism where K1 is expanded S103 to N bits by Alice and Bob simultaneously. The key stretching mechanism can be anyone among a Key Derivation Function (KDF) or a Deterministic Random Bit Generator (DRBG). The stretched N-bits key obtained is called K3.

Meanwhile, using its QRNG device, Alice generates S104 a N-bits key K4. K4 is then symmetrically encrypted S105 using K2 such that C = BlockCipherEnc(key=K2, data=K4) and C is sent to Bob, which then uses K2 to compute BlockCipherDec(key=K2, data=C) to decrypt S106 the message and recover K4.

Once, Alice and Bob have retrieved K3 and K4 following the above steps, i.e., once Alice and Bob have parallelly exchanged the two N-bits key (K3 and K4), using only two 256-bits QKD-exchanged keys (K1 and K2), they both compute S107, S107' K = K3 XOR K4 and deliver it to their respective consumer S108, S108'.

Up to the limitations of the different cryptographic schemes and devices leveraged, using greater value of N does not weaken the overall security of the scheme. Moreover, our solution is basically agnostic on the choice of symmetric encryption scheme and key stretching mechanism leveraged. They could for example be set on a per-user basis or according to some standards.

While the embodiments have been described in conjunction with a number of embodiments, it is evident that many alternatives, modifications and variations would be or are apparent to those of ordinary skill in the applicable arts. Accordingly, this disclosure is intended to embrace all such alternatives, modifications, equivalents and variations that are within the scope of this disclosure. This for example particularly the case regarding the exact number of bits.

## Claims

1. Quantum Key Distribution system comprising an emitter and a receiver adapted to exchange QKD-based key comprising:
- starting (S100) a process and triggering (S101) QKD-based key exchange between the emitter and the receiver,
- exchanging (S102) a first key K1 and a second key K2 between the emitter and the receiver,
- generating (S103) a third key K3 by expanding said first key K1 at both the emitter and the receiver,
- generating (S104) a fourth key K4 at the emitter via its QRNG, and
- encrypting (S105) K4 with K2 as a message C using a symmetric encryption scheme, and send it to the receiver,
- decrypting (S106) message C with K2 to obtain K4 at the receiver,
- generating (S107, S107') a fifth key K at the emitter and the receiver by computing K = K3 XOR K4, and
- delivering (S108, S108') K to respective consumers.

2. Quantum Key Distribution system according to claim 1, **characterized in that** K1 is expanded by a key stretching mechanism where K1 is expanded to N bits by the emitter and the receiver simultaneously.

3. Quantum Key Distribution system according to claim 1, **characterized in that** the key stretching mechanism can be anyone among a Key Derivation Function (KDF) or a Deterministic Random Bit Generator (DRBG).

4. Quantum Key Distribution system to any one of claim 1 to 3 **characterized in that** K1 and K2 are 256 bits key.

5. Quantum Key Distribution system according to any one of claims 1 to 3, **characterized in that** K3 and K4 are N-bits.

6. Quantum Key Distribution system according to any one of claims 1 to 4, **characterized in that** the symmetric encryption scheme consists in a BlockCipher Encryption procedure such that C = BlockCipherEnc(key=K2, data=K4).

7. Quantum Key Distribution system according to any one of claims 1 to 4, **characterized in that** the symmetric Decryption scheme consists in a BlockCipher Decryption procedure such that K4 = BlockCipherDec(key=K2, data=C).

8. Quantum Key Distribution method to be implemented by the Quantum Key Distribution system of claims 1 to 7 comprising:
- starting (S100) a process and triggering (S101) QKD-based key exchange between the emitter and the receiver,
- exchanging (S102) a first key K1 and a second key K2 between the emitter and the receiver,
- generating (S103) a third key K3 by expanding said first key K1 at both the emitter and the receiver,
- generating (S104) a fourth key K4 at the emitter via its QRNG,
- encrypting (S105) K4 with K2 as a message C using a symmetric encryption scheme, and send it to the receiver,
- decrypting (S106) message C with K2 to obtain K4 at the receiver,
- generating (S107, S107') a fifth key K at the emitter and the receiver by computing K = K3 XOR K4, and
- delivering (S108, S108') K to respective consumers.

## Patentansprüche

1. Quantenschlüssel-Verteilungssystem, umfassend einen Sender und einen Empfänger, die dazu geeignet sind, QKD-basierte Schlüssel auszutauschen, umfassend:
- Starten (S100) eines Prozesses und Auslösen (S101) eines QKDbasierten Schlüsselaustauschs zwischen dem Sender und dem Empfänger,
- Austauschen (S102) eines ersten Schlüssels K1 und eines zweiten Schlüssels K2 zwischen dem Sender und dem Empfänger,
- Erzeugen (S103) eines dritten Schlüssels K3 durch Erweitern des ersten Schlüssels K1 sowohl an dem Sender als auch an dem Empfänger,
- Erzeugen (S104) eines vierten Schlüssels K4 an dem Sender über dessen QRNG, und
- Verschlüsseln (S105) von K4 mit K2 als eine Nachricht C unter Verwendung eines symmetrischen Verschlüsselungsschemas, und Senden an den Empfänger,
- Entschlüsseln (S106) der Nachricht C mit K2, um K4 an dem Empfänger zu erhalten,
- Erzeugen (S107, S107') eines fünften Schlüssels K an dem Sender und an dem Empfänger durch Berechnen von K = K3 XOR K4, und
- Liefern (S108, S108') von K an jeweilige Verbraucher.

2. Quantenschlüssel-Verteilungssystem nach Anspruch 1, **dadurch gekennzeichnet, dass** K1 durch einen Schlüsselverlängerungsmechanismus erweitert wird, wobei K1 von dem Sender und von dem Empfänger gleichzeitig auf N Bits erweitert wird.

3. Quantenschlüssel-Verteilungssystem nach Anspruch 1, **dadurch gekennzeichnet, dass** der Schlüsselverlängerungsmechanismus beliebig entweder eine Schlüsselableitungsfunktion (KDF) oder ein deterministischer Zufallsbitgenerator (DRBG) sein kann.

4. Quantenschlüssel-Verteilungssystem nach einem der Ansprüche 1 bis 3, **dadurch gekennzeichnet, dass** K1 und K2 256-Bit-Schlüssel sind.

5. Quantenschlüssel-Verteilungssystem nach einem der Ansprüche 1 bis 3, **dadurch gekennzeichnet, dass** K3 und K4 N-Bits sind.

6. Quantenschlüssel-Verteilungssystem nach einem der Ansprüche 1 bis 4, **dadurch gekennzeichnet, dass** das symmetrische Verschlüsselungsschema aus einem Blockchiffre-Verschlüsselungsverfahren besteht, sodass C = BlockCipherEnc(key=K2, data=K4) gilt.

7. Quantenschlüssel-Verteilungssystem nach einem der Ansprüche 1 bis 4, **dadurch gekennzeichnet, dass** das symmetrische Entschlüsselungsschema aus einem Blockchiffre-Entschlüsselungsverfahren besteht, sodass K4 = BlockCipherDec(key=K2, data=C) gilt.

8. Verfahren zur Quantenschlüssel-Verteilung, das durch das Quantenschlüssel-Verteilungssystem nach den Ansprüchen 1 bis 7 implementiert werden soll, umfassend:
- Starten (S100) eines Prozesses und Auslösen (S101) eines QKDbasierten Schlüsselaustauschs zwischen dem Sender und dem Empfänger,
- Austauschen (S102) eines ersten Schlüssels K1 und eines zweiten Schlüssels K2 zwischen dem Sender und dem Empfänger,
- Erzeugen (S103) eines dritten Schlüssels K3 durch Erweitern des ersten Schlüssels K1 sowohl an dem Sender als auch an dem Empfänger,
- Erzeugen (S104) eines vierten Schlüssels K4 an dem Sender über dessen QRNG,
- Verschlüsseln (S105) von K4 mit K2 als eine Nachricht C unter Verwendung eines symmetrischen Verschlüsselungsschemas, und Senden an den Empfänger,
- Entschlüsseln (S106) der Nachricht C mit K2, um K4 an dem Empfänger zu erhalten,
- Erzeugen (S107, S107') eines fünften Schlüssels K an dem Sender und an dem Empfänger durch Berechnen von K = K3 XOR K4, und
- Liefern (S108, S108') von K an jeweilige Verbraucher.

## Revendications

1. Système de distribution de clés quantiques comprenant un émetteur et un récepteur adaptés pour échanger des clés basées sur la QKD, comprenant :
- le démarrage (S100) d'un processus et le déclenchement (S101) d'un échange de clés basé sur la QKD entre l'émetteur et le récepteur,
- l'échange (S102) d'une première clé K1 et d'une deuxième clé K2 entre l'émetteur et le récepteur,
- la génération (S103) d'une troisième clé K3 en étendant ladite première clé K1 à la fois à l'émetteur et au récepteur,
- la génération (S104) d'une quatrième clé K4 au niveau de l'émetteur via son QRNG, et
- le chiffrage (S105) de K4 avec K2 en tant que message C à l'aide d'un schéma de chiffrement symétrique, et l'envoi au récepteur,
- le décryptage (S106) du message C avec K2 pour obtenir K4 au niveau du récepteur,
- la génération (S107, S107') d'une cinquième clé K au niveau de l'émetteur et du récepteur en calculant K = K3 XOR K4, et
- la livraison (S108, S108') de K aux consommateurs respectifs.

2. Système de distribution de clés quantiques selon la revendication 1, **caractérisé en ce que** K1 est étendu par un mécanisme d'étirement de clé où K1 est étendu à N bits par l'émetteur et le récepteur simultanément.

3. Système de distribution de clés quantiques selon la revendication 1, **caractérisé en ce que** le mécanisme d'extension de clé peut être n'importe lequel parmi une fonction de dérivation de clé (KDF) ou un générateur de bits aléatoires déterministes (DRBG).

4. Système de distribution de clés quantiques selon l'une des revendications 1 à 3, **caractérisé en ce que** K1 et K2 sont des clés de 256 bits.

5. Système de distribution de clés quantiques selon l'une des revendications 1 à 3, **caractérisé en ce que** K3 et K4 sont des clés de N bits.

6. Système de distribution de clés quantiques selon l'une des revendications 1 à 4, **caractérisé en ce que** le schéma de cryptage symétrique consiste en une procédure de cryptage BlockCipher telle que C = BlockCipherEnc(clé=K2, donnée=K4).

7. Système de distribution de clés quantiques selon l'une des revendications 1 à 4, **caractérisé par le fait que** le schéma de décryptage symétrique consiste en une procédure de décryptage BlockCipher telle que K4 = BlockCipherDec(clé=K2, donnée=C).

8. Procédé de distribution de clés quantiques à mettre en œuvre par le système de distribution de clés quantiques des revendications 1 à 7, comprenant :
- le démarrage (S100) d'un processus et le déclenchement (S101) d'un échange de clés basé sur le QKD entre l'émetteur et le récepteur,
- l'échange (S102) d'une première clé K1 et d'une deuxième clé K2 entre l'émetteur et le récepteur,
- la génération (S103) d'une troisième clé K3 en étendant ladite première clé K1 à la fois à l'émetteur et au récepteur,
- la génération (S104) d'une quatrième clé K4 au niveau de l'émetteur via son QRNG,
- le décryptage (S105) de K4 avec K2 en tant que message C à l'aide d'un système de chiffrement symétrique, et l'envoyer au récepteur,
- le décryptage (S106) du message C avec K2 pour obtenir K4 au niveau du récepteur,
- la génération (S107, S107') d'une cinquième clé K au niveau de l'émetteur et du récepteur en calculant K = K3 XOR K4, et
- la livraison (S108, S108') de K aux consommateurs respectifs.
